# EUROPÄISCHE PATENTSCHRIFT

(11) **EP 1 712 341 B1**
(45) Veröffentlichungstag und Bekanntmachung des Hinweises auf die Patenterteilung: **23.07.2008**
(21) Anmeldenummer: 06006648.7
(22) Anmeldetag: 30.03.2006
(51) Int. Cl.: B29C 45/27, B29C 45/28

(54) **Spritzgiessdüse mit zwei Austrittsöffnungen**
Injection nozzle with two outlet orifices
Buse d'injection avec deux orifices de sortie

(30) Priorität: 15.04.2005 DE 102005017413
(43) Veröffentlichungstag der Anmeldung: 18.10.2006
(73) Patentinhaber: Otto Männer Innovation GmbH, 79353 Bahlingen (DE)
(72) Erfinder: Spuller, Swen, 79362 Forchheim (DE)
(74) Vertreter: Dimmerling, Heinz

(56) Entgegenhaltungen:
- EP-A1- 0 614 744
- DE-U1- 8 107 987
- US-A- 5 334 010
- US-A1- 2004 009 259

## Beschreibung

Die Erfindung betrifft eine Spritzgießdüse nach dem Oberbegriff des Anspruchs 1, mit wenigstens einer Auslassöffnung, sowie wenigstens einem zwangsgesteuerten Verschlusselement, mittels welchem eine Anbindungsöffnung einer Spritzgießform verschließbar ist.

Eine derartige Spritzgießdüse ist beispielsweise aus der DE 38 43 035 A1 bekannt. Die bekannte Spritzgießdüse hat am Ende eines Zufuhrkanals für Kunststoffschmelze eine Auslassöffnung, durch welche sich eine Verschlussnadel erstreckt. Mittels der Verschlussnadel lässt sich eine mit der Auslassöffnung der Spritzgießdüse verbundene Anbindungsöffnung einer Spritzgießform verschließen. Hierdurch wird einerseits die Zufuhr von Kunststoffschmelze durch die Auslassöffnung in die Spritzgießform unterbunden und andererseits ein Rückfluss von Kunststoffschmelze aus der Spritzgießform unterbunden.

Des Weiteren ist eine derartige Spritzgießdüse aus der DE 102 31 093 A1 bekannt. Diese bekannte Spritzgießdüse weist zwei in entgegengesetzte Richtungen gewandte Auslassöffnungen auf, durch welche sich jeweils eine Verschlussnadel erstreckt, mittels welcher jeweils eine Anbindungsöffnung einer Spritzgießform verschließbar ist. Jede Auslassöffnung ist mit einem Zuführkanal für Kunststoff verbunden, so dass aus den Auslassöffnungen Kunststoff austreten und der Anbindungsöffnung der Spritzgießform zugeführt werden kann.

Zum Schließen der Anbindungsöffnungen werden die Verschlussnadeln der bekannten Spritzgießdüsen soweit axial verstellt, dass sie sich in die betreffenden Anbindungsöffnungen der jeweiligen Spritzgießformen erstrecken, wodurch diese dicht verschlossen sind. Um eine einwandfreie Oberfläche der herzustellenden Spritzgussteile zu erhalten, ist es erforderlich, dass die Verschlussnadeln soweit in die Anbindungsöffnungen eindringen, dass die Stimseite der Verschlussnadeln mit der Oberfläche des betreffenden Spritzgussteils fluchtet. Dies ist in der Praxis jedoch nur äußerst schwer zu erreichen. Es sind daher aufwendige Einstellarbeiten erforderlichen.

Ragt die Verschlussnadel nicht weit genug in die Anbindungsöffnung hinein, das heißt, befindet sich die Stimfläche der Verschlussnadel in einem Abstand von der Oberfläche des Spritzgussteils, bildet sich an der Angussstelle ein kleiner Pfropfen aus. Ragt die Verschlussnadel soweit in die Anbindungsöffnung hinein, dass sie sich bis in das Spritzgussteil hineinerstreckt, können beim Entformen des Spritzgussteils Streifen auf der Oberfläche des Spritzgussteils entstehen, wodurch dieses unter Umständen nicht mehr gebraucht werden kann.

Aus der DE 81 07 987 U ist eine Heißkanaldüse mit Nadelventil bekannt, welche eine zwangsgesteuerte Verschlussnadel aufweist, die durch einen Zylinder betätigt wird, dessen Kolben im nicht betätigten Zustand durch eine Druckfeder wieder in seine Ruhestellung gebracht wird.

Des Weiteren ist aus der EP 0 614 744 A1 eine Spritzgießvorrichtung bekannt, welche eine zwangsgesteuerte Verschlussnadel enthält, welche durch den Kolben eines ersten Zylinders betätigbar ist. Die Vorrichtung weist einen zweiten Zylinder auf, dessen Kolben auf den Kolben des ersten Zylinders einwirkt und diesen um einen Kurzhub verstellen kann. Durch eine entsprechende Ansteuerung des zweiten Zylinders lässt sich somit der Kolben des ersten Zylinders und damit die Verschlussnadel um einen Kurzhub gegen ihre Schließrichtung verstellen.

Es ist Aufgabe der Erfindung, eine eingangs genannte Spritzgussdüse derart auszubilden, dass ohne aufwendige Justagearbeiten ein einwandfreies Spritzgussteil hergestellt werden kann.

Die Lösung dieser Aufgabe ergibt sich aus den Merkmalen des Anspruchs 1. Vorteilhafte Weiterbildungen der Erfindung ergeben sich aus den Unteransprüchen.

Dadurch, dass Mittel vorhanden sind, mittels welcher das Verschlusselement um einen Kurzhub gegen die Schließrichtung des Verschlusselements verstellbar ist, lässt sich in vorteilhafter Weise erreichen, dass das Verschlusselement sich zunächst in das Spritzgussteil hineinerstreckt, wodurch ausgeschlossen ist, dass sich an der Angussstelle ein Pfropfen bildet, und danach in einem Abstand vom Spritzgussteil angeordnet ist, wodurch die Gefahr einer Streifenbildung beim Entformen nicht mehr besteht. Es lassen sich somit stets einwandfreie Spritzgussteile herstellen.

Durch die Kurzhubmittel kann eine genaue Justage des Verschlusselements entfallen. Denn dadurch, dass das Verschlusselement zunächst in das Spritzgussteil hineinragt und unmittelbar danach in einem Abstand vom Spritzgussteil angeordnet ist, ist es nicht mehr erforderlich, dass das Verschlusselement in seiner Schließposition eine exakte Stellung einnimmt.

Als sehr vorteilhaft hat sich ein Kurzhub von etwa 0,05 bis 1 Millimeter, insbesondere 0,1 bis 0,5 Millimeter, vorzugsweise 0,3 Millimeter herausgestellt. Hierdurch ist einerseits eine sichere Verschließung der Angussöffnung der Spritzgießform und andererseits ein genügend großer Abstand des Verschlusselements von der Oberfläche des Spritzgussteils gewährleistet.

In vorteilhafter Weise ist das Verschlusselement mittels eines Antriebs betätigbar, welcher ein Rückstellelement aufweist mit einer Arbeitsposition und einer Ruheposition, welches bei nicht betätigtem Antrieb selbsttätig seine Ruheposition einnimmt. Dadurch, dass der Antrieb ein Rückstellelement aufweist, ist der Kurzhub gegen die Schließrichtung des Verschlusselements auf einfache Weise realisiert.

Betätigt der Antrieb das Verschlusselement, gelangt das Rückstellelement in seine Arbeitsposition, bei welcher das Verschlusselement in das Spritzgussteil hineinragt. Nachdem das Verschlusselement seine Endposition erreicht hat, gelangt das Rückstellelement von seiner Arbeitsposition in seine Ruheposition, wodurch das Verschlusselement einen geringen Weg gegen die Schließrichtung zurücklegt, so dass das Verschlusselement nicht mehr in das Spritzgussteil hineinragt sondern in einem Abstand vom Spritzgussteil angeordnet ist. Durch das Rückstellelement lässt sich der Kurzhub sehr einfach und sehr genau durchführen.

Sehr vorteilhaft ist es, wenn das Rückstellelement als Tellerfeder ausgebildet ist, wie dies bei einer weiteren besonderen Ausführungsform der Erfindung vorgesehen ist. Ein derart ausgebildetes Rückstellelement lässt sich auf einfache Weise und damit kostengünstig herstellen und arbeitet sehr genau und zuverlässig.

Das Rückstellelement kann aber auch als separates pneumatisch oder hydraulisch betriebenes Element oder ein anderes aus der Spritzgusstechnik bekanntes Verschlussnadel-Antriebssystem ausgebildet sein, wie beispielsweise ein Kurzhubzylinder. Hierdurch lässt sich bei kleiner Bauform eine große Kraft erzeugen.

Bei einer weiteren besonderen Ausführungsform sind wenigstens zwei in unterschiedliche Richtungen weisende Austrittsöffnungen vorhanden, deren Verschlusselemente mittels eines Verstellmittels verstellbar sind. Der Antrieb für die Verschlusselemente kann somit auf ein gemeinsames Verstellmittel wirken. Hierdurch kann der Kurzhub gegen die Schließrichtung bei allen Verschlusselementen gleichzeitig durchgeführt werden.

Des Weiteren wird dadurch, dass die Verschlusselemente mittels eines Verstellmittels verstellbar sind, in vorteilhafter Weise erreicht, dass die Bewegungen der Verschlusselemente synchron und gleichmäßig erfolgt. Das heißt, das Öffnen beziehungsweise Schließen der Anbindungsöffnungen hat bei allen Anbindungsöffnungen im Wesentlichen denselben Verlauf. Hierdurch wird ein sehr gleichmäßiges Befüllen der Spritzgießform erreicht. Dies wiederum wirkt sich sehr vorteilhaft auf die Qualität der Spritzgussteile aus.

In vorteilhafter Weise sind die Verschlusselemente mittels einer Kulissenführung gesteuert. Hierdurch lässt sich eine sehr präzise Verstellung der Verschlusselemente erreichen.

Als besonders vorteilhaft hat sich eine Ausführungsform der Erfindung herausgestellt, bei der die Verschlusselemente als Verschlussnadeln ausgebildet sind, die sich durch die Austrittsöffnungen erstrecken und an ihren den Austrittsöffnungen entgegengesetzten Enden T-förmig ausgebildet sind und jeweils in einer längs eines Konus oder eines Keils verlaufenden T-Nut eines zentralen Stabes angeordnet sind. Eine derartige Steuerung der Verschlusselemente lässt sich einerseits relativ einfach realisieren und funktioniert andererseits sehr präzise und zuverlässig.

Dadurch, dass die Verschlusselemente relativ weit in die Anbindungsöffnungen einer Spritzgießform eindringen können, ist es möglich, die Verschlussnadeln an ihren sich durch die Austrittsöffnungen erstreckenden Enden zylinderförmig auszubilden. Hierdurch vereinfacht sich die Herstellung der Verschlussnadeln deutlich.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine Spritzgießdüse mit zwei seitlich angeordneten Austrittsöffnungen, durch welche sich mittels eines zentralen Stabes verstellbare Verschlussnadeln zum Verschließen einer Anbindungsöffnung einer Spritzgießform erstrecken, wobei die Verschlussnadeln in einer Position dargestellt sind, in der sie die Anbindungsöffnung nicht verschließen,
- Figur 2: die in Figur 1 dargestellte Spritzgießdüse, jedoch sind die Verschlussnadeln in einer Position dargestellt sind, in der sie die Anbindungsöffnung verschließen,
- Figur 3: die in Figur 1 dargestellte Spritzgießdüse, jedoch sind die Verschlussnadeln in einer Position dargestellt, in der sie die Anbindungsöffnung verschließen, aber gegenüber der in Figur 2 dargestellten Position um einen Kurzhub verstellt,
- Figur 4: einen Schnitt durch die in Figur 1 dargestellte Anordnung längs der Schnittlinie A-A und
- Figur 5: einen Schnitt durch die in Figur 2 dargestellte Anordnung längs der Schnittlinie B-B.

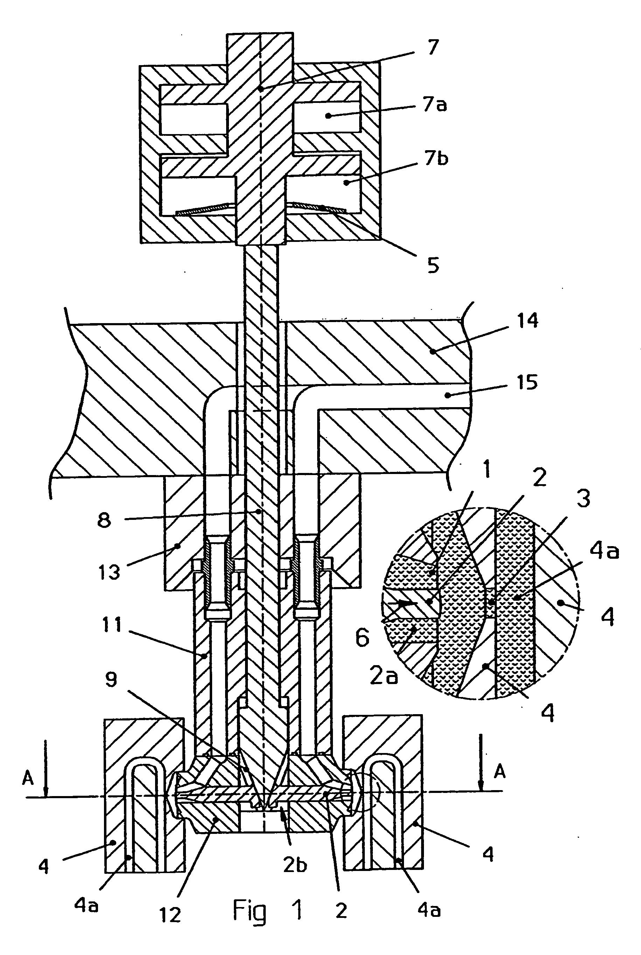

Wie den Figuren 1 bis 3 entnommen werden kann, ist an einem Düsenkörper 11 ein Düsenkopf 12 angeordnet, der zwei in entgegengesetzte Richtungen weisende Auslassöffnungen 1 hat, durch welche sich Verschlussnadeln 2 erstrecken. Die Verschlussnadeln 2 sind im Düsenkopf 12 axial verschieblich gelagert. An ihren den Auslassöffnungen 1 zugewandten Enden 2a haben die Verschlussnadeln 2 einen zylindrisch ausgebildeten Bereich. An ihren den Auslassöffnungen 1 abgewandten Enden 2b haben die Verschlussnadeln 2 einen im Durchmesser vergrößerten Bereich, wodurch sie dort im Querschnitt T-förmig ausgebildet sind.

Durch den Düsenkörper 11 erstreckt sich ein Stab 8, welcher im Düsenkörper 11 axial verschieblich gelagert ist. Der Stab 8 hat an seinem dem Düsenkopf 12 zugewandten Ende einen im Durchmesser vergrößerten und keilförmig beziehungsweise spitz ausgebildeten Bereich. Dieser spitz ausgebildete Bereich bildet den Boden beziehungsweise Nutgrund axial verlaufender T-förmig ausgebildeter Nuten 9. In den Nuten 9 sind die T-förmig ausgebildeten Enden der Verschlussnadeln 2 angeordnet, so dass die Verschlussnadeln 2 durch den Stab 8 zwangsgesteuert sind.

Der Düsenkörper 11 ist mit einem Düsenträgerring 13 verbunden, der seinerseits mit einem Verteilerblock 14 verbunden ist.

Der Stab 8 erstreckt sich durch einen Düsenträgerring 13, mit dem der Düsenkörper 11 verbunden ist, sowie durch einen Verteilerblock 14, mit dem der Düsenträgerring 13 verbunden ist. An seinem dem Düsenkopf 12 abgewandten Ende ist der Stab 8 mit einem Doppelkolben 7 eines Druckzylinders verbunden, der zwei Kammern 7a, 7b aufweist. In der unteren Kammer 7b ist eine Tellerfeder 5 angeordnet, welche bei Betätigung des Druckzylinders zusammengedrückt, das heißt gespannt wird.

Durch den Verteilerblock 14, den Düsenträgerring 13, den Düsenkörper 11 sowie den Düsenkopf 12 erstreckt sich ein Zuführkanal 15 für Schmelze. Der Zuführkanal 15 mündet in den Auslassöffnungen 1, so dass aus diesen Schmelze austreten kann.

Die Auslassöffnungen 1 des Düsenkopfs 12 sind jeweils gegenüber einer Anbindungsöffnung 3 eines Formeneinsatzes 4 angeordnet. Die Formeinsätze 4 weisen Hohlräume 4a auf, in welche über die Anbindungsöffnungen 3 aus den Auslassöffnungen 1 austretende Schmelze eingespritzt werden kann.

Wie insbesondere der in einem Kreis dargestellten vergrößerten Einzelheit der Figur 1 entnommen werden kann, befindet sich die Verschlussnadel 2 im Wesentlichen vollständig im Düsenkopf 12, wenn sich der Druckzylinder in seiner Ruhestellung befindet, das heißt, sich der Doppelkolben 7 im oberen Bereich der Kammern 7a, 7b befindet. In dieser Stellung sind die Anbindungsöffnungen 3 vollständig geöffnet, so dass Kunststoffschmelze aus den Auslassöffnungen 1 über die Anbindungsöffnungen 3 in die Hohlräume 4a der Formeinsätze 4 eintreten kann.

Nachdem auf den Druckzylinder Druck gegeben wird, bewegt sich der Doppelkolben 7 in den unteren Bereich der Kammern 7a, 7b. Hierdurch wird der Stab 8 in den Düsenkopf 12 geschoben, wodurch sich die Verschlussnadeln 2 in Richtung der Anbindungsöffnungen 3 verstellen.

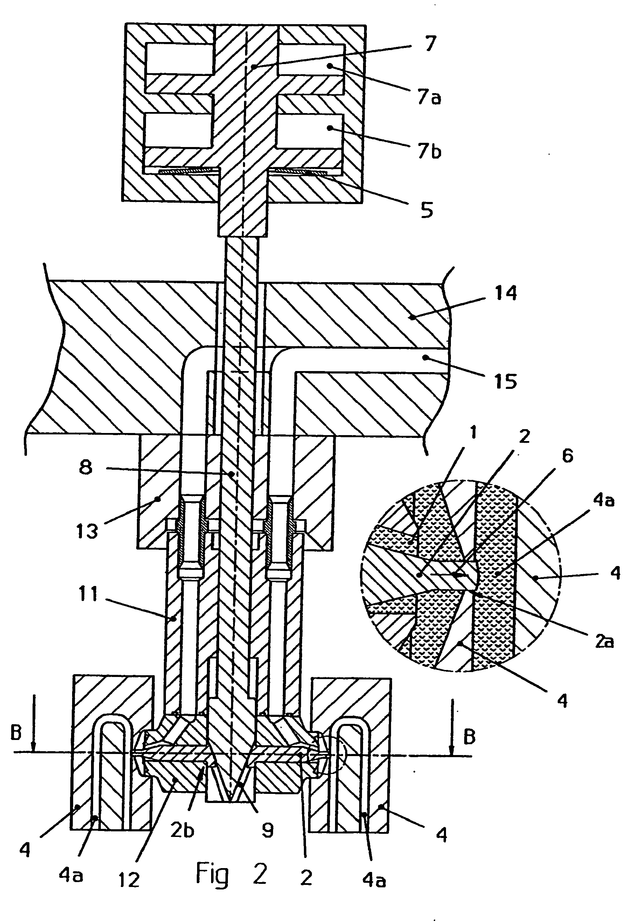

Wie insbesondere der in einem Kreis dargestellten vergrößerten Einzelheit der Figur 2 entnommen werden kann, erstrecken sich die Verschlussnadeln 2 dann, wenn sich der Doppelkolben 7 in seiner Betriebsstellung befindet, das heißt, sich der Doppelkolben am unteren Ende der Kammern 7a, 7b befindet, vollständig durch die Anbindungsöffnungen 3 und befinden sich geringfügig in den Hohlräumen 4a, das heißt, da die Hohlräume 4a zwischenzeitlich mit Schmelze gefüllt wurden, geringfügig in den Spritzgussteilen.

Nachdem der Doppelkolben 7 das untere Ende der Kammern 7a, 7b erreicht hat, wird der Druckzylinder nicht mehr mit Druck beaufschlagt. Hierdurch kann sich die Blattfeder 5 entspannen, wodurch sich der Doppelkolben 7 und mit ihm der Stab 8 etwas nach oben bewegt.

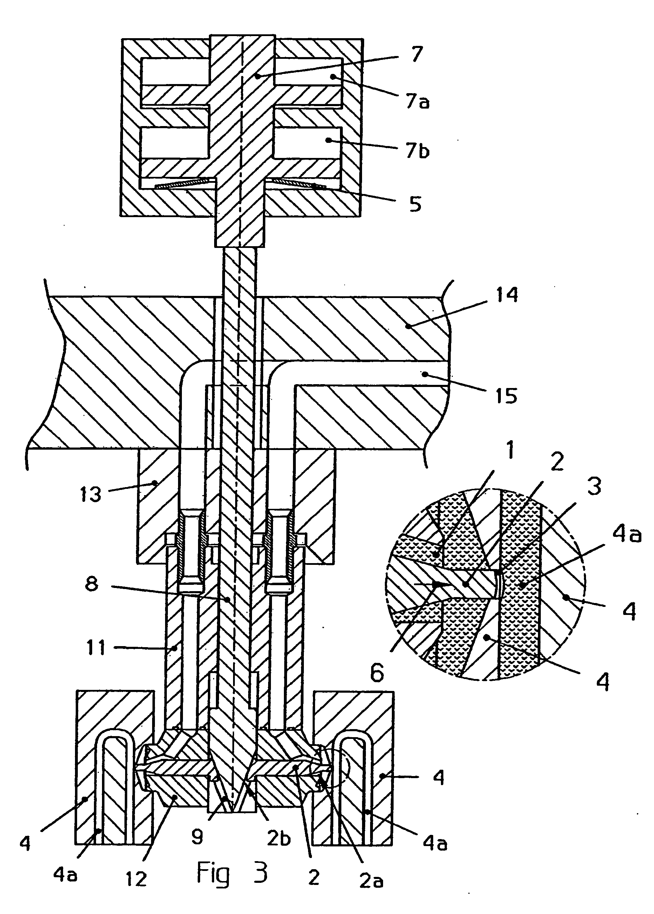

Bedingt durch die Zwangssteuerung der Verschlussnadeln 2 werden diese gegen die Schließrichtung 6 der Verschlussnadeln 2 etwas zurückbewegt. Diese Position ist in Figur 3 dargestellt.

Wie insbesondere der in einem Kreis dargestellten vergrößerten Einzelheit der Figur 3 entnommen werden kann, sind in dieser Position die Anbindungsöffnungen 3 immer noch verschlossen. Die Verschlussnadeln 2 befinden sich jedoch nicht mehr in den Hohlräumen 4a sondem in einem Abstand zu den Hohlräumen 4a, das heißt zu den sich in den Hohlräumen 4a befindlichen Spritzgussteilen. Hierdurch können die Spritzgussteile entformt werden, ohne dass zu befürchten ist, dass ihre Oberflächen durch die Verschlussnadeln 2 beschädigt werden.

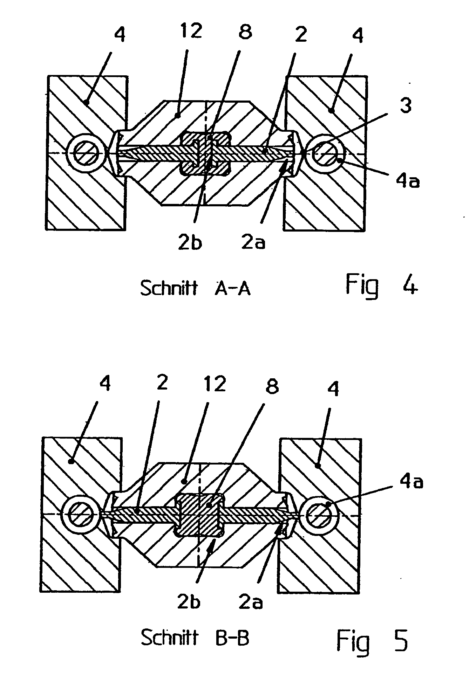

Die Zwangssteuerung lässt sich insbesondere den Figuren 4 und 5 entnehmen. Wie den Figuren 4 und 5 entnommen werden kann, sind in dem spitz verlaufenden Ende des Stabes 8 T-förmige Nuten ausgebildet. In den Nuten verlaufen die T-förmig ausgebildeten Enden 2b der Verschlussnadeln 2.

Bei der in Figur 4 dargestellten Position des Stabes 8, die der in Figur 1 dargestellten Position des Stabes 8 entspricht, sind die Verschlussnadeln 2 in ihrer hintersten Stellung, so dass sie sich nahezu vollständig innerhalb des Düsenkopfes 12 befinden. Insbesondere befinden sich die den Auslassöffnungen 1 zugewandten Enden 2a der Verschlussnadein 2 in einem Abstand von den Anbindungsöffnungen 3 der Formeinsätze 4. Hierdurch kann Schmelze aus den Auslassöffnungen 1 des Düsenkopfes 12 über die Anbindungsöffnungen 3 der Formeinsätze 4 in den Hohlraum 4a fließen.

Bei der in Figur 5 dargestellten Position des Stabes 8, der der in Figur 2 dargestellten Position des Stabes 8 entspricht, befinden sich die Verschlussnadeln 2 in ihrer vorderen Stellung, wodurch sich die den Auslassöffnungen 1 zugewandten Enden 2a der Verschlussnadeln 2 in den Anbindungsöffnungen 3 befinden. Hierdurch sind diese verschlossen, so dass Schmelze weder in die Hohlräume 4a der Formeinsätze 4 eintreten noch aus diesen austreten kann.

## Patentansprüche

1. Spritzgießdüse mit wenigstens einer Auslassöffnung (1), sowie wenigstens einem zwangsgesteuerten Verschlusselement (2), mittels welchem eine Anbindungsöffnung (3) einer Spritzgießform (4) verschließbar ist, wobei das Verschlusselement (2) mittels eines Antriebs (7) betätigbar ist, welcher ein als Rückstellelement (5) ausgebildetes Kurzhubmittel mit einer Arbeitsposition und einer Ruheposition aufweist, welches bei nicht betätigtem Antrieb (7) selbsttätig seine Ruheposition einnimmt und wobei das Verschlusselement (2) mittels des Kurzhubmittels (5) um einen Kurzhub gegen die Schließrichtung (6) des Verschlusselements (2) verstellbar ist, **dadurch gekennzeichnet dass** der Kurzhub etwa 0,05 bis 1 Millimeter, insbesondere 0,1 bis 0,5 Millimeter, vorzugsweise 0,3 Millimeter beträgt.

2. Spritzgießdüse nach Anspruch 1,
**dadurch gekennzeichnet,**
**dass** das Rückstellelement (5) als Tellerfeder ausgebildet ist.

3. Spritzgießdüse nach einem der Ansprüche 1 oder 2,
**dadurch gekennzeichnet,**
**dass** wenigstens zwei in unterschiedliche Richtungen weisende Auslassöffnungen (1) vorhanden sind, deren Verschlusselemente (2) mittels eines Verstellmittels (8) verstellbar sind.

4. Spritzgießdüse nach einem der Ansprüche 1 bis 3,
**dadurch gekennzeichnet,**
**dass** die Verschlusselemente (2) mittels einer Kulissenführung (9) gesteuert sind.

5. Spritzgießdüse nach einem der Ansprüche 1 bis 4.
**dadurch gekennzeichnet,**
**dass** die Verschlusselemente (2) als Verschlussnadeln ausgebildet sind, die sich durch die Auslassöffnungen (1) erstrecken und an ihren den Austrittsöffnungen (1) entgegengesetzten Enden (2b) T-förmig ausgebildet sind und jeweils in einer längs eines Konus verlaufenden T-Nut (9) eines zentralen Stabes (8) angeordnet sind.

6. Spritzgießdüse nach Anspruch 5,
**dadurch gekennzeichnet,**
**dass** die Verschlussnadeln (2) an ihren sich durch die Auslassöffnungen (1) erstreckenden Enden (2a) zylinderförmig ausgebildet sind.

## Claims

1. Injection moulding nozzle comprising at least one outlet opening (1) and at least one positively controlled closure element (2), by means of which a connecting opening (3) of an injection mould (4) is closable, wherein the closure element (2) can be actuated by means of a drive (7) which has short stroke means configured as a return element (5) which has a working position and a rest position and which, with the drive (7) not actuated, automatically assumes its rest position, and wherein the closure element (2) is adjustable by means of the short stroke means (5) by a short stroke distance in a direction opposing the closing direction (6) of the closure element (2), **characterised in that** the short stroke distance is approximately 0.05 mm to 1 mm, in particular 0.1 mm to 0.5 mm and preferably 0.3 mm.

2. Injection moulding nozzle according to claim 1, **characterised in that** the return element (5) is configured as a plate spring.

3. Injection moulding nozzle according to one of the claims 1 or 2, **characterised in that** at least two outlet openings (1) facing in different directions are provided, their closure elements (2) being adjustable by means of an adjusting means (8).

4. Injection moulding nozzle according to one of the claims 1 to 3, **characterised in that** the closure elements (2) are controlled by means of a sliding guide (9).

5. Injection moulding nozzle according to one of the claims 1 to 4, **characterised in that** the closure elements (2) are configured as closure needles, which extend through the outlet openings (1) and are configured T-shaped at their ends (2b) opposing the outlet openings (1) and are each arranged in a T-groove (9) of a central rod (8), said T-groove running along a cone.

6. Injection moulding nozzle according to claim 5, **characterised in that** the closure needles (2) are configured cylindrical at their ends (2a) extending through the outlet openings (1).

## Revendications

1. Buse d'injection comprenant au moins un orifice de sortie (1), ainsi qu'au moins un élément obturateur (2) à commande forcée, au moyen duquel peut être obturé un orifice de rattachement (3) d'un moule (4) de coulée par injection, sachant que ledit élément obturateur (2) peut être actionné au moyen d'un entraînement (7) muni d'un moyen à faible course qui est réalisé sous la forme d'un élément de rappel (5) présentant une position de travail et une position de repos, et qui prend automatiquement sa position de repos lorsque l'entraînement (7) n'est pas actionné ; et sachant que ledit élément obturateur (2) peut être déplacé d'une faible course, à l'aide du moyen (5) à faible course, en sens inverse de la direction de fermeture (6) dudit élément obturateur (2),
**caractérisée par le fait**
**que** la faible course mesure d'environ 0,05 à 1 millimètre, notamment de 0,1 à 0,5 millimètre et, de préférence, 0,3 millimètre.

2. Buse d'injection selon la revendication 1,
**caractérisée par le fait**
**que** l'élément de rappel (5) est réalisé sous la forme d'une rondelle élastique.

3. Buse d'injection selon l'une des revendications 1 ou 2,
**caractérisée par**
la présence d'au moins deux orifices de sortie (1) orientés dans des directions différentes, dont les éléments obturateurs (2) peuvent être déplacés à l'aide d'un moyen de réglage (8).

4. Buse d'injection selon l'une des revendications 1 à 3,
**caractérisée par le fait**
**que** les éléments obturateurs (2) sont commandés au moyen d'un système de guidage coulissant (9).

5. Buse d'injection selon l'une des revendications 1 à 4,
**caractérisée par le fait**
**que** les éléments obturateurs (2) sont conçus comme des pointeaux obturateurs qui traversent les orifices de sortie (1) ; sont réalisés en forme de T à leurs extrémités (2b) situées en vis-à-vis desdits orifices de sortie (1) ; et sont respectivement logés dans une rainure en T (9) s'étendant le long d'un cône et pratiquée dans un fût central (8).

6. Buse d'injection selon la revendication 5,
**caractérisée par le fait**
**que** les pointeaux obturateurs (2) sont de réalisation cylindrique à leurs extrémités (2a) traversant les orifices de sortie (1).
